# EUROPEAN PATENT APPLICATION

(11) **EP 1 418 068 A1**
(43) Date of publication of application: **12.05.2004**
(21) Application number: 02079674.4
(22) Date of filing: 08.11.2002
(51) Int. Cl.: B60G 3/00, B60G 17/015, B60K 17/04, B60K 17/22

(54) **Vehicle with improved cargo space**

(71) Applicant: Terberg Techniek B.V., 3401 MA Ijsselstein (NL)
(72) Inventor: Schoeman, Guido Gilbert, 3905 AG Veenendaal (NL)
(74) Representative: Grootscholten, Johannes Antonius Maria

(57) **Abstract**

The invention relates to a vehicle, comprising a frame; a drive means carried by the frame; wheels, comprising at least one front wheel and at least two rear wheels, which are rotatable and connected to the frame via suspension elements and of which selected wheels are connected to the drive means. The front wheel is pivotable and the direction thereof is controlled through a steering installation and the rear wheels are each connected to the frame via at least two suspension elements extending substantially upwards next to the rear wheel and at the front and the rear of the axis of rotation of the rear wheel.

## Description

The present invention relates to a vehicle for transport of people and / or goods, comprising a frame, a carriage on the frame defining a transport space for the people or goods, drive means for locomotion of the vehicle with wheels arranged in wheel closets formed in the carriage, where a distance between opposite wheel closets defines the width of transport space and a suspension system comprising at least one suspension element in each wheel closet.

In known vehicles suspension elements, by their very nature, exhibit a degree of flexibility, that is desirable only in so far as the damping function as a component of a suspension system is employed. However, these suspension elements also exhibit a degree of freedom of movement in practically all other directions, e.g. in the longitudinal and lateral direction of the vehicle. Without further measures being taken, wheels on a vehicle could flutter, and the rolling direction thereof would then more often than not be misaligned with the desired driving direction. Therefore, in the prior art, linkages for stabilising the wheels have usually been employed, that are for instance referred to as reaction rods and the like.

However, such linkages, rods, etc. involve a number of disadvantages. For instance such linkages comprise a number of hinges for connection to the frame and to the suspension elements or the wheels. Possibly even more important is the disadvantage, that such linkages require considerable amounts of space to be incorporated. Especially this goes at the cost of the transport space, in particular between wheel closets, and / or the height of the floor of that transport space. This latter aspect is especially relevant, when a low step-on height is desired, for instance in busses.

The present invention is directed at obviating these advantages, or at least improving over the prior art to a considerable extent, for which purpose a vehicle according to the present invention distinguishes itself in that the suspension elements per wheel are independently fixed to a corresponding wheel closet in a predetermined upright position relative to the vehicle.

In such a configuration according to the present invention no other components are necessary for suspending the wheels than the suspension elements themselves, whereby the space available, in terms of floor area in the transport space as well as a low floor, thereby increasing the volume of the transport space, is improved. No rods or linkages are necessary to stabilize the wheels, and omission thereof enables the improvements.

The present invention comprises several preferred embodiments, as will be set forth herein below, to which the present invention is itself not restricted.

In an embodiment a single suspension element is ranged in a wheel closet of a steered wheel, that is further connected to a steering installation. Usually steered wheels are the front wheels. Thus, by the combined connection of steered wheels to both the fixed suspension element and the steering installation, orientation of the steered wheels in the driving direction is ensured, without any risk of fluttering or misalignment.

In another embodiment at least two suspension elements are arranged in a wheel closet of a non-steered or follower wheel, respectively in front of and behind the wheel axis, relative to a direction of motion. Such non-steered or follower wheels are usually the back wheels. These non-steered or follower wheels are stabilized by the combined connection to both suspension elements. These follower wheels will therefore reliably follow the direction of motion. In such a configuration the at least two suspension elements can be interconnected by a cross portion at downward directed parts thereof, where the wheel is connected to that cross portion. That cross portion then extends in the direction of motion of the vehicle, and the non-steered or follower wheel is thereby effectively orientated likewise. The cross portion can accommodate a transmission, connected to a drive axle of the drive means. This is particularly advantageous, when the wheel connected to the cross portion is a driven wheel. Such a transmission in the cross portion at the driven wheel will result in a lighter drive axle being required under the floor of the carriage, said drive axle extending towards the wheel. With a lighter drive axle the height of that floor of the carriage can be lowered further. In embodiments, where the transmission then further has a vertical orientation, extending downward from the wheel axis of the driven wheel for connection to the drive axle, the height of the floor of the carriage can be lowered even further over practically the entire inner surface of the floor area in the transport space.

In a further embodiment the wheel and the wheel axis are interconnected by an additional transmission, arranged in a housing, that is confined by the wheel itself. In embodiments without the cross portion, accommodating a transmission, said transmission in the housing confined by the wheel ensures the same or a similar effect of being able to employ lighter drive axles. Thereby, again, the floor of the carriage can be lowered. In configurations with a transmission in the cross portion, the transmission ratio from the drive axle to the wheel itself can be increased even further, enabling the use of even lighter drive axles.

In another embodiment the frame carries a motor, that is a part of the drive means, and a wheel closet near the motor then preferably comprises at least two suspension elements. Since the load carried by these suspension elements is usually greater than the load carried by more distant suspension elements, an effective feature for keeping the configuration of the vehicle simple is thereby provided. The load exerted by the motor is effectively dealt with and carried by the double suspension elements in the nearby wheel closet. It is noted, that the double suspension elements in wheel closets near the motor can have the same configuration as the suspension elements in wheel closets of non-steered or follower wheels, as defined herein above.

Especially in embodiments with a number of suspension elements per wheel closet varies, as is the case in the different embodiments defined herein above, very advantageous embodiment in itself prescribes, that the suspension elements in the wheel closets are mutually identical.

In yet another embodiment, the suspension elements are adjustable in length to selectively and temporarily lower the vehicle. In motion, it will be desirable for the vehicle to have a considerable distance between the floor of the carriage and the surface, over which the vehicle is driving to ensure a proper functioning of the suspension elements. However, to lower the step-on height and facilitate the process of getting on board, the suspension elements can be thus adjustable in length. In this way, while the vehicle is standing still and the suspension function is temporarily not needed, lowering the carriage is not only possible, but highly advantageous. Getting on board can thus be facilitated considerably, especially for senior citizens, physically challenged people, etc. In yet another embodiment the vehicle can comprise a hydraulic system, wherein at least some of the suspension elements comprise a hydraulic cylinder. In such an embodiment lowering the carriage can be provided for in very simple and elegant manner, while in motion a hydraulic cylinder is particularly suited for the function of a component in a suspension system. When providing a hydraulic system on a vehicle, it could further be very advantageous to employ hydraulically activated brakes, whereas in the prior art of particularly busses airbrakes are employed and thus the need for two pressurised systems would be obviated.

Herein below a specific embodiment of a vehicle according to the present invention will be described under reference to the accompanying drawings. In the drawings the same reference numbers will be employed for identical or similar components. The drawings show in:
Fig. 1 a schematic side view of a bus according to the present invention;
Fig. 2 a detail of a driven wheel of a vehicle according to the present invention;
Fig. 3 a similar view as fig. 2 but from a different perspective;
Fig. 4a and fig. 4b cross sectional views of a vehicle according to the present invention in a raised and a lowered position respectively; and
Fig. 5 partially in cross section a bottom view of a detail of the steering installation of a vehicle according to the present invention.

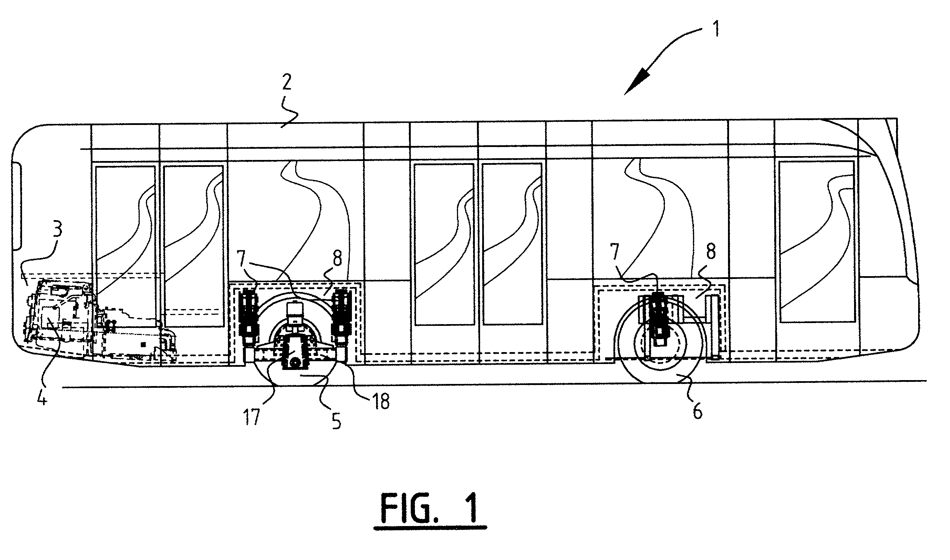

Fig. 1 shows a bus 1 as a possible embodiment of a vehicle according to the present invention.

The bus comprises a carriage 2 on a frame, which is not explicitly shown in this fig. 1. Further, in the back of the carriage 2 of the bus 1 a motor 4 is arranged in a motor compartment 3. Also, the bus 1 is equipped with front wheels 6 and rear wheels 5. The front wheels 6 are, as described in more detail herein below, connected to a steering installation. The rear wheels 5 are follower wheels, that are normally not used for steering. However, this is not excluded.

The front wheels 6 and rear wheels 5 are each arranged in a wheel closet 8. Also in the wheel closets 8, suspension elements 7 are arranged. In each of the wheel closets 8 of the rear wheels 5, two suspension elements 7 are arranged, whereas in the wheel closets 8 of the front wheels single suspension elements 7 are provided.

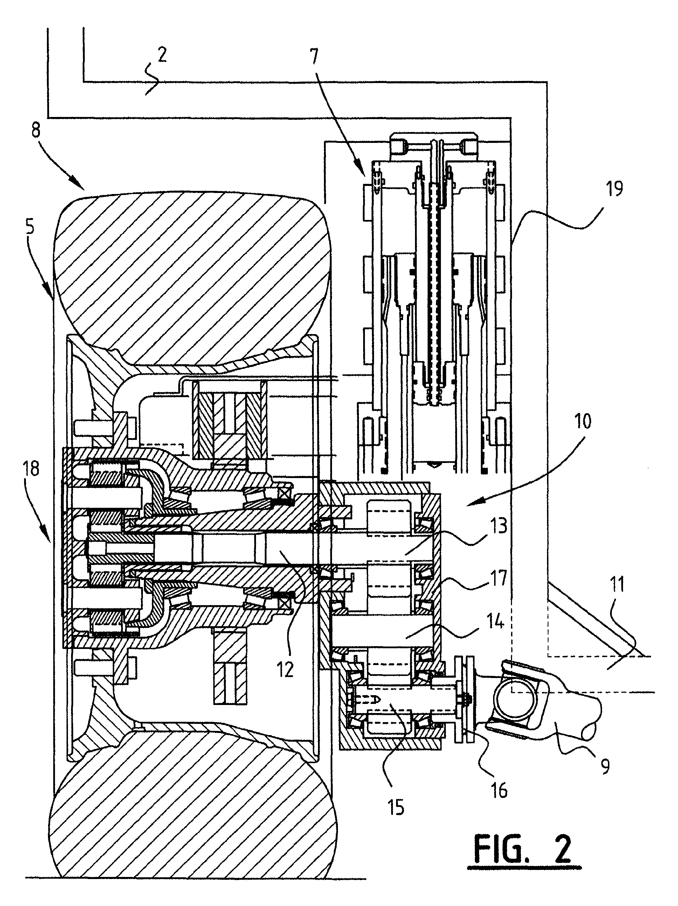

Shown in fig. 2 is a wheel closet 8 of a rear wheel 5. As noted above, the rear wheel 5 is a follower wheel, and is connected to the motor 4 via a drive axle 9, extending under the floor 11 of the carriage 2.

The drive axle 9 is connected to a wheel axis 12 of the rear wheel 5 via a first transmission, comprising three stages 13, 14 and 15, which successively extend in a downward direction from the wheel axis 12 to a coupling 16 with the drive axle 9. The first transmission 10 is arranged in a housing 17 shown in fig. 1 as well, from which fig. 1 it is apparent that a cross bar 18 accommodates the housing 17 of the first transmission 10. This cross bar 18 extends between the lower extremities of the two suspension elements 7 in fig. 1, thus forming a portal.

As shown in fig. 2, the wheel axis 12 is further connected to the actual wheel 5 by a second transmission 18, which is therefore arranged at the ultimate end of the drive line from the motor 4 to the rear wheel 5.

By way of example, the transmission 10 can be embodied such, that it has a transmission ratio of 1:1,5, while the second transmission 18 could have a ratio of 1 : 4. Thereby, the combined transmission ratio is such, that the drive axle 9 can be provided in a very light embodiment. As a result of the vertical configuration of the first transmission 10, the drive axle 9 can further be connected to at a very low point.

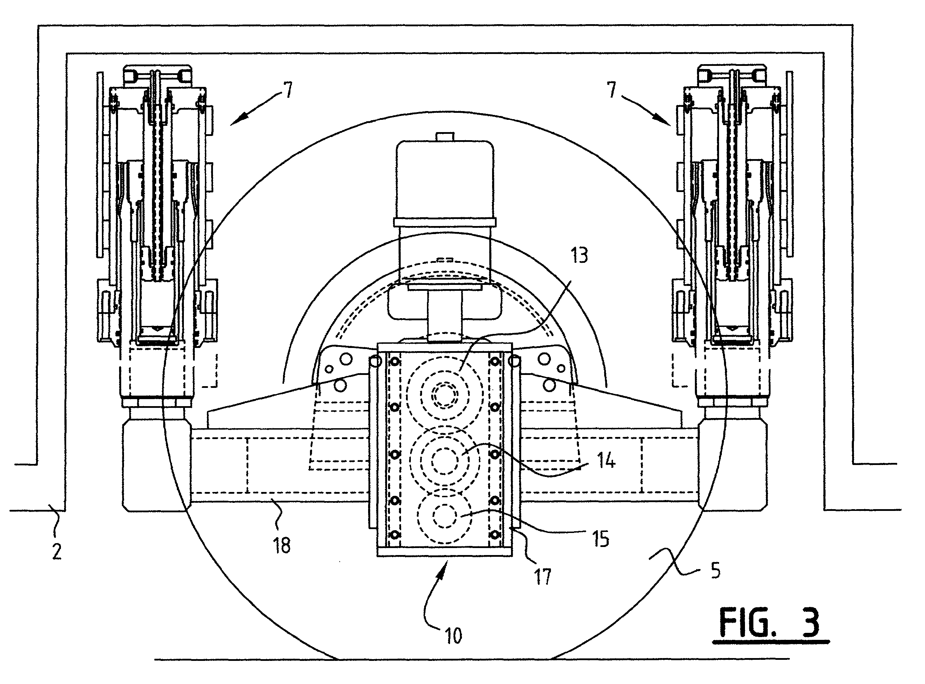

Further, the suspension elements 7, which are hydraulic cylinders in the embodiment of fig. 2, are attached to the wheel closet 8 along the inner surface 19 thereof in a fixed vertical position or orientation. As a result of this orientation, in combination with the cross bar 18, fluttering of the rear wheels 5 is effectively prevented and these rear wheels 5 will remain aligned with the driving direction of the vehicle, which is also apparent from fig. 3 of the same or a similar configuration as fig. 2 but shows a side view, partially in cross section.

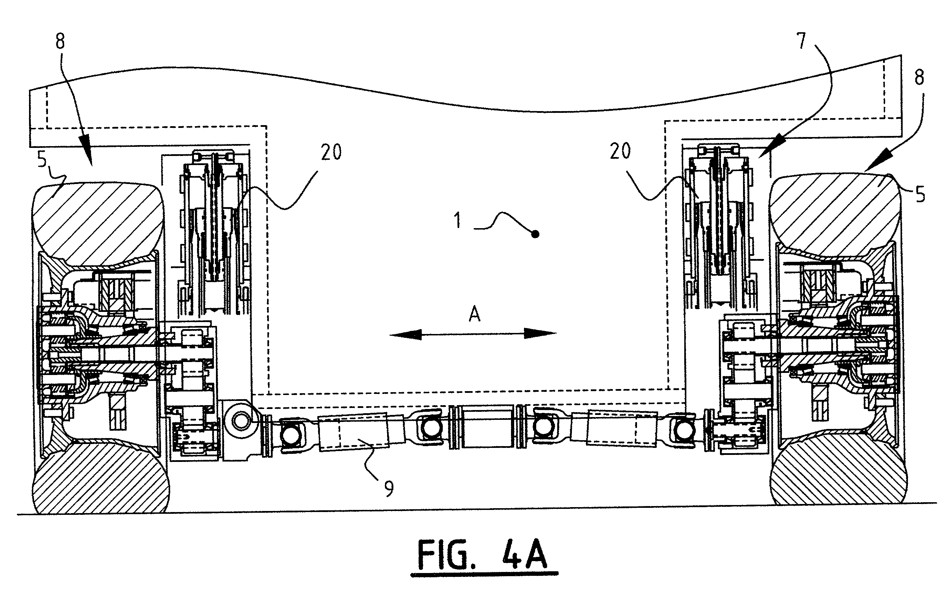

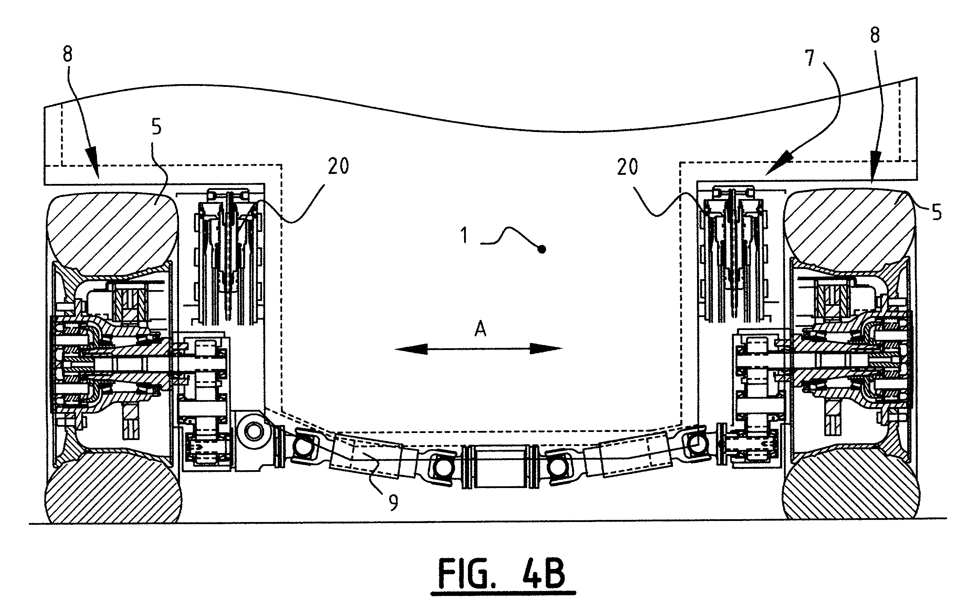

Further, figs. 4A and 4B show a detail of the bus 1 in cross section, from which it is apparent that there is an optimal amount of floor space, indicated with double arrow A in fig. 4A between the wheel closets 8, because of the chosen configuration of the suspension elements 7 and the other features of the present invention.

The hydraulic cylinders, forming the suspension elements 7, further exhibit yet another function, than damping vibrations only. The bus 1 can therewith be lowered and raised. In fig. 4A the bus is raised and in fig. 4B the bus is lowered. Lowering the bus can be beneficial to lower the step-on height of the bus. This is shown in fig. 4B, in which it is also clear, that the suspension elements 7 are length adjustable, in particular by controlling the size of a chamber 20 thereof, control over which is achieved with a hydraulic system, that is not specifically shown in any of these figures. However, implementation of hydraulic cylinders as suspension elements 7 and a hydraulic system for control thereof, is well within the reach of the skilled person, so that no further description thereof is considered necessary.

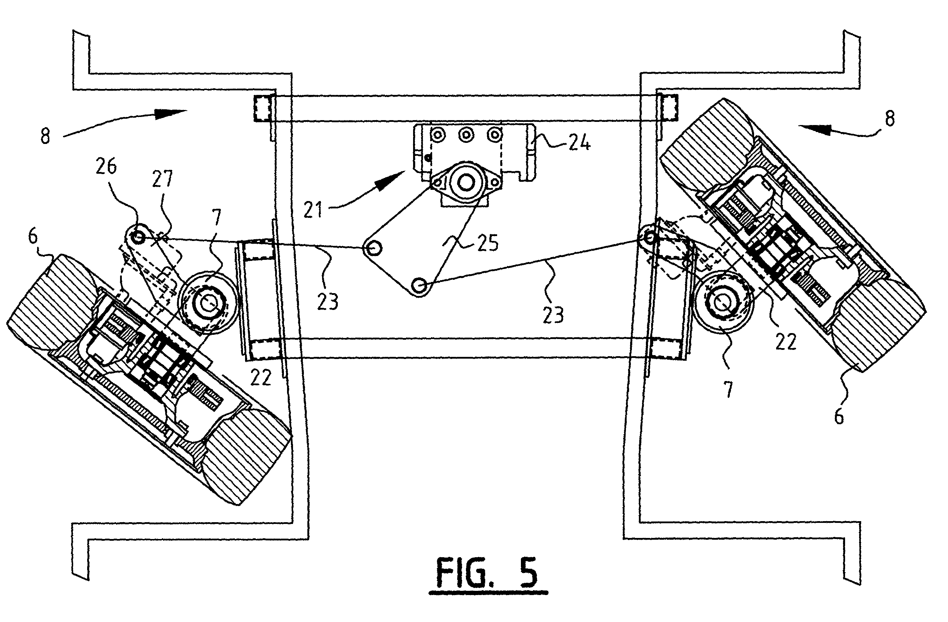

Fig. 5 further shows the front wheels 6 in their wheel closets 8, and the connection of those front wheels 6 to a steering installation 21. The suspension elements 7, which are similar and preferably identical hydraulic cylinders as the ones shown in for instance fig. 3, are in fig. 5 arranged such that they extend directly above the wheel axis 22 of the front wheels 6. Without any further measures being taken, the front wheels 6 would not be steerable, but would also be free to flutter relative to the direction of motion of the bus 1. The steering installation is used to prevent this from happening, where linkages 23 are connected to a steering house 24 via a connection plate 25, and the front wheels 6 at the extremity 26 of an arm 27. In this manner, the front wheels 6 are not only stabilized, but are steerable as well.

Now that a specific embodiment of a vehicle according to the present invention has been disclosed by the description above and shown in the accompanying drawings, many additional and/or alternative embodiments will present themselves to the skilled person without any inventive labour whatsoever. For instance, the front wheels could be driven by the motor as well; the bus could be a van for transport of people, but could also be any kind of transport vehicle for the transportation of goods, where for instance the floor surface of a cargo space is of importance, as well as the height of the cargo space, which with a lower floor can be increased considerably. Further, in the specific embodiments, hydraulic cylinders are used. These are considered to be a very advantageous implementation for suspension elements, but other kinds of suspension elements may also be employed.

## Claims

1. Vehicle, comprising a frame; a drive means carried by the frame; wheels, comprising at least one front wheel and at least two rear wheels, which are rotatable and connected to the frame via suspension elements and of which selected wheels are connected to the drive means, wherein the front wheel is pivotable and the direction thereof is controlled through a steering installation and the rear wheels are each connected to the frame via at least two suspension elements extending substantially upwards next to the rear wheel and at the front and the rear of the axis of rotation of the rear wheel.

2. Vehicle according to claim 1, wherein the wheels are independently suspended.

3. Vehicle according to claim 1 or 2, wherein the suspension elements at the rear wheel and at the front wheels are identical.

4. Vehicle according to a preceding claim, wherein the suspension elements are adjustable in length to selectively and temporarily lower the vehicle.

5. Vehicle according to claim 4, wherein the vehicle comprises a hydraulic system and at least some of the suspension elements comprise a hydraulic cylinders.

6. Vehicle according to a preceding claim, wherein the drive means is connected through a linkage to the selected wheels via a transmission at the wheel, comprising at least two stages, that are vertically oriented relative to one another, where the linkage is connected to the lower stage and the wheel is connected to the higher stage.

7. Vehicle according to claim 6, wherein the stages coupled, and each comprise a gear wheel.

8. Vehicle according to claim 6 or 7, wherein the wheel is connected to the upper stage via an additional transmission.

9. Vehicle according to claim 6, 7 or 8, where the linkage comprises at least one crank shaft.

10. Vehicle, comprising a frame; a drive means carried by the frame; wheels, comprising at least one front wheel and at least two rear wheels, which are rotatable and connected to the frame via suspension elements and of which selected wheels are connected to the drive means, wherein the drive means is connected to the selected wheels via a transmission at the wheel, comprising at least two stages, that are vertically oriented relative to one another, where the linkage is connected to the lower stage and the wheel is connected to the higher stage.
